# EUROPEAN PATENT SPECIFICATION

(11) **EP 0 468 614 B1**
(45) Date of publication and mention of the grant of the patent: **15.12.1993**
(21) Application number: 91302249.7
(22) Date of filing: 15.03.1991
(51) Int. Cl.: B25F 5/00, F16L 39/04

(54) **Pivotable connection for fluid operated tool**
Schwenkbarer Anschluss für druckmittelbetätigtes Werkzeug
Connexion pivotante pour outil actionné par fluide

(30) Priority: 23.07.1990 US 557166
(43) Date of publication of application: 29.01.1992
(73) Proprietor: Junkers, John K., Saddle River New Jersey 07458 (US)
(72) Inventor: Junkers, John K., Saddle River New Jersey 07458 (US)
(74) Representative: Newby, John Ross

(56) References cited:
- US-A- 3 917 322

## Description

The present invention relates generally to tools operated by pressurised working fluid and more particularly to hydraulically operated tools such as torque wrenches.

Fluid pressure-operated torque tools are known and widely used for tightening or loosening threaded connectors. A known fluid pressure-operated torque tool has an active part which engages and turns the threaded connector, and a drive part which drives the active part under the action of a pressurised working fluid. The drive part is usually formed as a cylinder-piston unit which is supplied with the working fluid from a source. Since during the operation, the cylinder-piston unit performs a forward stroke and a reverse stroke, the working fluid must be supplied alternately to opposite chambers of the cylinder on opposite sides of the piston in the cylinder-piston unit. For this purpose the cylinder is usually provided with two passages each having first ends which open into the chambers respectively on opposite sides of the piston, and second ends connected by a respective one of two hoses with a source of the working fluid. The connection of the second ends of the passages with the hoses is normally performed through swivel connectors and one such swivel connector is disclosed for example in my US Patent No. 4921010. This swivel connector has two parts which are swivelable relative to one another so as to prevent the hoses interfering one with the other during operation of the tool which very often resulted in inter-hose interference in the older tools. While the swivel connector described in the aforesaid patent is better than any previously used swivel connector, it does not completely eliminate the problem of the hoses hampering operation during manipulations with the tool.

It is one aim of the present invention to provide a fluid pressure-operated tool which avoids the disadvantages of the prior art tools.

More particularly, the present invention seeks to provide a fluid pressure-operated tool which is connected with a source of a pressurised working fluid so that it can be manipulated in any desirable manner without interference by hoses connecting the source to the tool.

One feature of the present invention resides, briefly stated, in a fluid pressure-operated tool which has an active part arranged to act on a threaded connector to be tightened or loosened, a fluid pressure-operated drive part arranged to act on the active part so that the latter tightens or loosens a threaded connector and a connector for connecting the drive part with the source of working fluid, which is characterised in that the connector has a first connector portion which is mounted on one of said parts turnably about a first axis, and a second connector portion which is mounted on the first connector portion turnably about a second axis which is inclined at an angle relative to the first axis.

A fluid pressure-operated tool in accordance with the present invention is easier to manipulate without interference by the hoses connected to a source of the working fluid on the one hand, and to the connector on the other hand.

The invention will now be further described, by way of example, with reference to the accompanying drawing, in which:
Figure 1 is a sectional side view of part of one embodiment of hydraulic tool in accordance with the present invention; and
Figure 2 is an end view of the hydraulic tool of Figure 1.

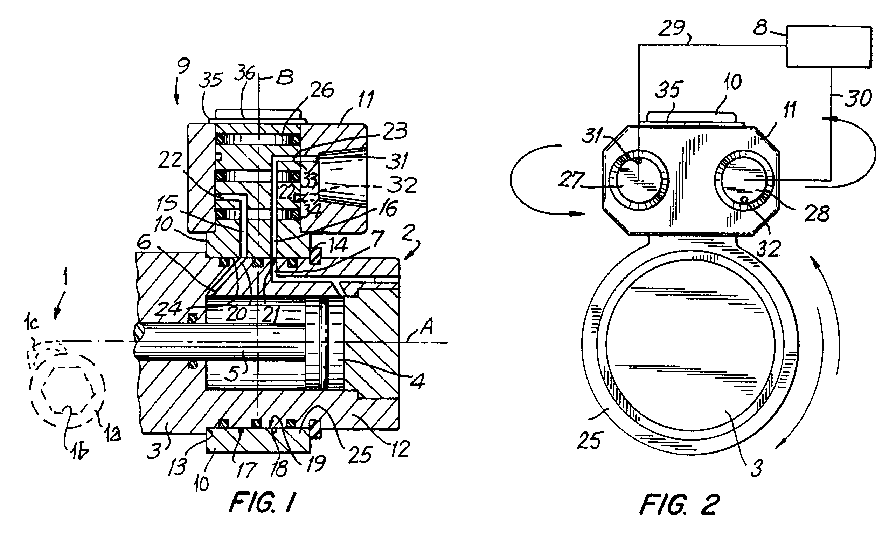

A hydraulic tool in accordance with the present invention has an active part which is identified with reference numeral 1 but is shown only schematically. The active part can be formed in a known manner as in other hydraulically operated tools and especially tool wrenches. In other words, it can have a rachet-pawl unit 1a with a ratchet having a hexagonal opening 1b or a formation for attaching a socket, and a pawl 1c engaging the ratchet and turnable together with a drive link as disclosed for example is US-A-4,825,730. The hydraulic tool further has a drive part identified as a whole with reference numeral 2 in Figure 1 and formed as a hydraulically operated cylinder-piston unit. The drive part 2 has a cylinder 3, a piston 4 movable in the cylinder 3 and provided with a piston rod 5 which is connected with the drive link carrying the pawl of the active part. During the operation of the hydraulic drive unit and respective displacement of the piston 4 in the cylinder 3, the drive link together with the pawl are turned in respective directions so as to turn the ratchet with the engaging formation and correspondingly turn a threaded connector. The cylinder 3 of the cylinder-piston unit has two chambers formed on opposite sides of the piston 4 but the right-hand chamber is of zero volume in the arrangement shown in Figure 1. For displacing the piston 4 in respective directions, the cylinder 3 is provided with passages 6 and 7 which extend to the respective chambers of the cylinder and through which hydraulic liquid can be supplied from a pressurised source 8 of the working fluid. Depending on whether the pressurised working fluid is supplied through the passage 6 or through the passage 7, the piston 4 is moved in a corresponding direction and as a result, the active part is turned in a corresponding direction to tighten or loosen a threaded connector to which it is attached.

The passages 6 and 7 are connected with the source 8 through a connector which is identified as a whole with reference numeral 9. The connector 9 has a first connector portion 10 and a second connector portion 11. The first connector portion 10 is seated on an end part 12 of the cylinder 3 which has a smaller diameter than the adjacent part of the cylinder 3. The first connector portion 10 thus abuts against a shoulder 13 formed at one extremity of the part 12 and is retained in this position by a retaining ring 14. The first connector portion 10 is rotatably arranged on the cylinder part 12 to turn about an axis A. The first connector portion 10 is provided with through-passages 15 and 16 having respective outlets 17 and 18 which are formed as annular grooves provided on an inner surface 19 of the connector portion 10. The outlets 17 and 18 of the passages 15 and 16 coincide, respectively, with inlets 20 and 21 of the passages 6 and 7 in the cylinder 3. The passages 15 and 16 also have respective inlet portions 22 and 23 which are each formed as an annular groove provided on an outer surface of the connector portion 10. More particularly, while the outlets 17 and 18 of the passages 15 and 16 are formed so that they open to an inner bore 24 of an annular section 25 of the connector portion 10, the inlets 22 and 23 are open on the outer surface of a cylindrical section 26 of the connector portion 10.

The second portion 11 of the connector 9 has spaced-apart inlets 27 and 28. Hoses 29 and 30 (shown schematically in Figure 2) extend from the source 8 and their opposite ends are inserted into the inlets 27 and 28. Passages 31 and 32 extend from the inlets 27 and 28 in the second connector portion 11 and their outlets 33 and 34 coincide with the inlets 22 and 23 of the passages 15 and 16 of the first connector portion 10. The second connector portion 11 is arranged turnably on the cylindrical section 26 of the first connector portion 10 and is retained on the latter by a retaining ring 35 which is received in a groove 36 formed in the first connector portion 10.

While the first connector portion 10 is mounted on the drive part 2 of the hydraulic tool to turn about the first axis A, the second connector portion 11 is mounted on the first connector portion 10 to turn about an axis B which extends at an angle relative to the axis A. In the illustrated embodiment the angle between the axes A and B is 90°; however, it need not be a right angle. In the illustrated embodiment, the connector portion 10 is mounted on the drive part 2 or on the cylinder 3 of the drive part; however, it can also be mounted on another part of the tool. As can be seen from the drawing, a plurality of sealing means (e.g. O-rings) are provided between the relatively movable parts to separate the hydraulic fluid from hose 29 and passages 31, 16 and 7 from the fluid in hose 30 and passages 32, 15 and 6 while allowing turning of connector portion 11 on the connector portion 10 and the connector portion 10 on the drive part 2.

When the hydraulic tool in accordance with the present invention is completely assembled with the first connector portion 10 mounted on the drive part 2, the second connector portion 11 mounted on the first connector portion 10, and the hoses 29 and 30 connected with the second connector portion 11 and with the source 8 of the working fluid, tightening or loosening of threaded connectors can be performed by the action of the active part 1. During operation of the tool and any manipulations with the tool to reach respective threaded connectors, the probability of the hoses interfering with the manipulations of the tool is minimal.

## Claims

1. A fluid pressure-operated tool, comprising an active part (1) arranged to act on a threaded connector for tightening and loosening the same; a drive part (2) arranged to operate said active part (1) so that said active part (1) tightens or loosens a threaded connector, said drive part (2) being formed as a fluid pressure-operated drive (4, 5); hose means (29, 30) arranged to supply a working fluid to said drive (4, 5); and a connector (9) connecting said hose means (29, 30) with said drive (4, 5) characterised in that said connector (9) includes a first connector portion (10) mounted on one of said parts (2) turnably relative to the latter about a first axis (A), and a second connector portion (11) mounted on said first connector portion (10) turnably about a second axis (B) which is inclined at an angle (90°) relative to said first axis (A).

2. A tool as claimed in claim 1, characterised in that said drive (4, 5) is formed as a hydraulic-cylinder piston unit (3) having an axis (A), said first axis (A) being said axis of said hydraulic cylinder-piston unit (3) so that the first connector portion (10) is turnable about said axis (A) of said hydraulic cylinder-piston unit (3).

3. A tool as claimed in claim 1 or claim 2, characterised in that said first connector portion (10) is mounted on said one part (2) and said second connector portion (11) is mounted on said first connector portion (10) so that said axes (A-B) extend at an angle substantially equal to 90°.

4. A tool as claimed in any preceding claim, characterised in that said hose means include two hoses (29, 30) each having one end connectable with the source (8) of pressurised working fluid, said second connector portion (11) having two second passages (31, 32) each having an inlet (27, 28) and an outlet (33, 34), said first connector portion (10) having two first passages (15, 16) each having an inlet (22, 23) and an outlet (17, 18), the other ends of said hoses (29, 30) being connected with said inlets (27, 28) of said second passages of said second connector portion (11), while said outlets (33, 34) of said second passages of said second connector portion (11) are connected with said inlets (23, 22) of said first passages (16, 15) of said first connector portion (10).

5. A hydraulic tool as claimed in claim 4 when dependent on claim 2, characterised in that said hydraulic cylinder-piston unit (3) has a cylinder, a piston (4) movable in said cylinder, and two chambers formed on opposite sides of said piston (4) in said cylinder, said outlets (17, 18) of said first passages (15, 16) of said first connector portion (10) being connected with said chambers, respectively.

6. A tool as claimed in any preceding claim, characterised in that the first connector portion (10) engages the drive part (2) via a bore (24) in an annular section (25) and the second connector portion (11) via cylindrical section (26).

7. A tool as claimed in claim 6, characterised in that the turnable connection of the annular section (25) on the drive part (2) includes spaced-apart grooves (17, 18) opening to the bore (24) and communicating with the drive (4, 5).

8. A tool as claimed in claim 7, characterised in that the turnable connection of the second connector portion (11) on the cylindrical section (26) includes spaced apart grooves (33, 34) communicating with the hoses (29, 30).

## Patentansprüche

1. Hydraulisches Werkzeug bestehend aus einem Funktionsteil (1) zur Einwirkung auf eine Schraubverbindung, um dieselbe festzuziehen oder zu lösen, aus einem Antriebsteil (2) zum Antrieb des genannten Funktionsteils (1), so daß das genannte Funktionsteil (1) eine Schraubverbindung festzieht oder löst, wobei das genannte Antriebsteil (2) als hydraulischer Antrieb (4, 5) ausgebildet ist, aus Schlauchmitteln (29, 30) zur Versorgung des genannten Antriebes (4, 5) mit einer Arbeitsflüssigkeit, und aus einem Anschlußstück (9) zum Anschluß der genannten Schlauchmittel (29, 30) an den genannten Antrieb (4, 5), dadurch gekennzeichnet, daß das genannte Anschlußstück (9) ein erstes Anschlußglied (10), das auf einem der genannten Teile (2) gegenüber diesem um eine erste Achse (A) drehbar angeordnet ist, und ein zweites Anschlußglied (11) umfaßt, das auf dem genannten ersten Anschlußglied (10) um eine zweite Achse (B) drehbar angeordnet ist, die in einem Winkel (90°) zur genannten ersten Achse (A) geneigt ist.

2. Werkzeug nach Anspruch 1, dadurch gekennzeichnet, daß der genannte Antrieb (4, 5) als Hydraulik-Zylinder/Kolben-Aggregat (3) mit einer Achse (A) ausgebildet ist, wobei die genannte erste Achse (A) die genannte Achse des genannten Aggregats (3) ist, so daß das erste Anschlußglied (10) um die genannte Achse (A) des genannten Aggregats (3) drehbar ist.

3. Werkzeug nach Anspruch 1 oder 2, dadurch gekennzeichnet, daß das erste Anschlußglied (10) auf dem genannten einen Teil (2) angeordnet ist und daß das genannte zweite Anschlußglied (11) auf dem genannten ersten Anschlußglied (10) so angeordnet ist, daß die genannten Achsen (A-B) in einem Winkel von im wesentlichen 90° verlaufen.

4. Werkzeug nach einem der vorhergehenden Ansprüche, dadurch gekennzeichnet, daß die genannten Schlauchmittel zwei Schläuche (29, 30) umfassen, von denen jeder ein an der Quelle (8) der unter Druck stehenden Arbeitsflüssigkeit anschließbares Ende hat, wobei das genannte zweite Anschlußglied (11) zwei zweite Durchgänge (31, 32) mit je einem Eingang (27, 28) und je einem Ausgang (33, 34) hat und wobei das genannte erste Anschlußglied (10) zwei erste Durchgänge (15, 16) mit je einem Eingang (22, 23) und je einem Ausgang (17, 18) hat, wobei die anderen Enden der genannten Schläuche (29, 30) mit den genannten Eingängen (27, 28) der genannten zweiten Durchgänge des genannten zweiten Anschlußglieds (11) verbunden sind, während die genannten Ausgänge (33, 34) der genannten zweiten Durchgänge des genannten zweiten Anschlußglieds (11) mit den genannten Eingängen (23, 22) der genannten ersten Durchgänge (16, 15) des genannten ersten Anschlußglieds (10) verbunden sind.

5. Hydraulisches Werkzeug nach Anspruch 4, insoweit wie von Anspruch 2 abhängig, dadurch gekennzeichnet, daß das genannte Aggregat (3) einen Zylinder, einen im genannten Zylinder beweglichen Kolben (4) und zwei an gegenüberliegenden Seiten des genannten Kolbens (4) im genannten Zylinder gebildete Kammern hat, wobei die genannten Ausgänge (17, 18) der genannten ersten Durchgänge (15, 16) des genannten ersten Anschlußglieds (10) mit den genannten jeweiligen Kammern verbunden sind.

6. Werkzeug nach einem der vorhergehenden Ansprüche, dadurch gekennzeichnet, daß das erste Anschlußglied (10) in das Antriebsteil (2) über eine Bohrung (24) in einem ringförmigen Teilstück (25) in das zweite Anschlußglied (11) über das zylindrische Teilstück (26) eingreift.

7. Werkzeug nach Anspruch 6, dadurch gekennzeichnet, daß der drehbare Anschluß des ringförmigen Teilstücks (25) auf dem Antriebsteil (2) voneinander beabstandete Nuten (17, 18) besitzt, die in die Bohrung (24) münden und mit dem Antrieb (4, 5) in Verbindung stehen.

8. Werkzeug nach Anspruch 7, dadurch gekennzeichnet, daß die drehbare Verbindung des zweiten Anschlußglieds (11) auf dem zylindrischen Teilstück (26) voneinander beabstandete Nuten (33, 34) besitzt, die mit den Schläuchen (29, 30) in Verbindung stehen.

## Revendications

1. Outil actionné par un fluide sous pression, comprenant une partie active (1) agencée de façon à agir sur un raccord fileté pour serrer et desserrer ce dernier; une partie motrice (2) agencée de façon à actionner ladite partie active (1) de telle sorte que ladite partie active (1) serre ou desserre un raccord fileté, ladite partie motrice (2) ayant la forme d'une commande (4, 5) actionnée par un fluide sous pression; des moyens formant tuyau (29, 30) agencés de façon à fournir un fluide moteur à ladite commande (4, 5); et un raccord (9) pour relier lesdits moyens formant tuyau (29, 30) à ladite commande (4, 5), caractérisé en ce que ledit raccord (9) comporte une première partie de raccord (10) montée sur une desdites parties (2) pour tourner par rapport à cette dernière autour d'un premier axe (A), et une seconde partie de raccord (11) montée sur ladite première partie de raccord (10) pour tourner autour d'un second axe (B) qui est incliné d'un certain angle (90°) par rapport audit premier axe (A).

2. Outil suivant la revendication 1, caractérisé en ce que ladite commande (4, 5) est formée par une unité de piston-cylindre hydraulique (3) ayant un axe (A), ledit premier axe (A) étant ledit axe de ladite unité de piston-cylindre hydraulique (3) de telle sorte que la première partie de raccord (10) peut tourner autour dudit axe (A) de ladite unité de piston-cylindre hydraulique (3).

3. Outil suivant la revendication 1 ou la revendication 2, caractérisé en ce que ladite première partie de raccord (10) est montée sur ladite partie (2) et en ce que ladite seconde partie de raccord (11) est montée sur ladite première partie de raccord (10) de telle sorte que lesdits axes (A-B) font un angle substantiellement égal à 90 degrés.

4. Outil suivant l'une ou l'autre des revendications précédentes, caractérisé en ce que lesdits moyens formant tuyau comprennent deux tuyaux (29, 30) ayant chacun une extrémité raccordable à la source (8) de fluide moteur sous pression, ladite seconde partie de raccord (11) ayant deux seconds passages (31, 32) ayant chacun une entrée (27, 28) et une sortie (33, 34), ladite première partie de raccord (10) ayant deux premiers passages (15, 16) ayant chacun une entrée (22, 23) et une sortie (17, 18), les autres extrémités desdits tuyaux (29, 30) étant raccordées auxdites entrées (27, 28) desdits seconds passages de ladite seconde partie de raccord (11), tandis que lesdites sorties (33, 34) desdits seconds passages de ladite seconde partie de raccord (11) sont raccordés auxdites entrées (22, 23) desdits premiers passages (15, 16) de ladite première partie de raccord (10).

5. Outil hydraulique suivant la revendication 4, dans la mesure où elle dépend de la revendication 2, caractérisé en ce que ladite unité de piston-cylindre hydraulique (3) comprend un cylindre, un piston (4) mobile dans ledit cylindre, et deux chambres formées de part et d'autre dudit piston (4) dans ledit cylindre, lesdites sorties (17, 18) desdits premiers passages (15, 16) de ladite première partie de raccord (10) étant raccordées auxdites chambres, respectivement.

6. Outil suivant l'une ou l'autre des revendications précédentes, caractérisé en ce que la première partie de raccord (10) touche la partie motrice (2) par un alésage (24) dans une section annulaire (25) et la seconde partie de raccord (11) par une section cylindrique (26).

7. Outil suivant la revendication 6, caractérisé en ce que le raccordement tournant de la section annulaire (25) dans la partie motrice (2) comprend des gorges espacées (17, 18) s'ouvrant vers l'alésage (24) et communiquant avec la commande (4, 5).

8. Outil suivant la revendication 7, caractérisé en ce que le raccordement tournant de la seconde partie de raccord (11) dans la section cylindrique (26) comprend des gorges espacées (33, 34) communiquant avec les tuyaux (29, 30).
